# EUROPÄISCHE PATENTANMELDUNG

(11) **EP 2 112 595 A2**
(43) Veröffentlichungstag der Anmeldung: **28.10.2009**
(21) Anmeldenummer: 09002354.0
(22) Anmeldetag: 19.02.2009
(51) Int. Cl.: G06F 9/445

(54) **Portabler Datenträger**

(30) Priorität: 23.04.2008 DE 102008020343
(71) Anmelder: Giesecke & Devrient GmbH, 81677 München (DE)
(72) Erfinder: Spitz, Stephan Dr., 81247 München (DE); Englbrecht, Erich, 81671 München (DE)

(57) **Zusammenfassung**

Auf einem portablen Datenträger (1), der einen Mikroprozessor (2), weitere Hardware-Module (10a), zumindest einen Speicher (4, 5), in dem Betriebssystem-Module (10b, 10c) eines Betriebssystems (9) des Datenträgers (1) gespeichert sind, und einen Speicher (5), in dem eine ausführbare Applikation (11) gespeichert ist, umfasst, ist das Betriebssystem (9) bzw. vorzugsweise der Betriebssystemkern (12a) des Datenträgers (1) derart eingerichtet, dass bei Ausführung (S4) einer Applikation (11) auf dem Mikroprozessor (2) von der Applikation (11) benötigte Module (10) des Datenträgers (1) bestimmt (S5) und selektiv aktiviert (S6) und wieder deaktiviert werden können.

## Beschreibung

Die vorliegende Erfindung betrifft ein Verfahren zur Ausführung einer Applikation auf einen portablen Datenträger mit einem Mikroprozessor sowie einen derartigen Datenträger mit Mikroprozessor.

Die Speicherkapazitäten von ROM-Speichern und wiederbeschreibbaren Speichern (z.B. EEPROM, Flash oder dergleichen) sind bei portablen Datenträgern prinzipiell eingeschränkt. Bei der Ausführung von Betriebssystemfunktionen hat der ROM-Speicher gegenüber dem EEPROM-Speicher den Vorteil, dass er preiswerter in der Herstellung, schneller und manipulationssicherer ist, weshalb z.B. bei Mikroprozesor-Chipkarten wesentliche Teile des Betriebssystems, nämlich zumindest die die eigentlichen Betriebssystemfunktionen bereitstellenden, bibliotheksartig ausgestalteten Betriebssystem-Module, bei der Herstellung des Datenträgers weitgehend standardisiert in den ROM-Speicher geschrieben werden und lediglich ergänzende Teile im Rahmen der nachfolgenden Komplettierung im wiederbeschreibbaren Speicher abgelegt werden. Obwohl die Komplettierung des Betriebssystems dazu führen kann, dass einige Betriebssystem-Module gar nicht aufgerufen und genutzt werden können, werden im Rahmen des Bootvorgangs des Datenträgers dennoch alle auf dem Datenträger vorhandenen Betriebssystem-Module aktiviert bzw. initialisiert.

Neben diesen Betriebssystem-Software-Modulen umfasst ein portabler Datenträger auch vom Betriebssystem unterstützte Hardware-Module, wie z. B. Schnittstellen für bestimmte Kommunikationsprotokolle (z.B. ISO oder USB), Hardware-Bausteine mit bestimmten Funktionen (z.B. UART-Pufferspeicher) oder dergleichen, die auch beim Starten des Datenträgers im Rahmen des Bootvorgangs aktiviert bzw. initialisiert werden. Die Aktivierung bzw. Initialisierung von Hardware-Modulen verbraucht jedoch unabhängig von einem tatsächlichen Zugriff Ressourcen, also insbesondere Speicher, Rechenzeit und / oder Energie.

Im Zusammenhang mit dem Zugriff von Applikationen auf Hardwarekomponenten eines Datenträgers schlägt die WO 01/16707 A1 eine Hardware-Abstraktionsschicht ("Hardware Abstraction Layer"; HAL) zum Zugriff mittels abstrakter Anweisungen vor. Obwohl eine Applikation nach dieser Architektur über die Hardware-Abstraktionsschicht direkt auf Hardwarekomponenten zugreifen kann, wird ein ressourceneffizientes Verhalten des Datenträgers dadurch nicht unterstützt.

Es ist demzufolge die Aufgabe der vorliegenden Erfindung, eine ressourceneffiziente Bereitstellung und Nutzung von Betriebssystem- und Hardware-Modulen auf einem portablen Datenträger zu ermöglichen.

Diese Aufgabe wird erfindungsgemäß durch ein Verfahren sowie einen portablen Datenträger mit den Merkmalen der unabhängigen Ansprüche gelöst. Die davon abhängigen Ansprüche beschreiben vorteilhafte Ausgestaltungen und Weiterbildungen der Erfindung.

Ein erfindungsgemäßer portabler Datenträger umfasst einen Mikroprozessor zur Ausführung von Applikationen des Datenträgers sowie weitere Hardware-Module und ein in einem Speicher des Datenträgers gespeichertes Betriebssystem mit Betriebssystem-Modulen, wobei die Betriebssystem-Module vorzugsweise im ROM-Speicher des Datenträgers abgelegt sind. Bei der Ausführung von in einem Speicher des Datenträgers vorliegenden Applikationen durch den Mikroprozessor werden die zur Ausführung der Applikation benötigten Hardware- und Betriebssystem-Module selektiv zum Zwecke der Ausführung dieser Applikation aktiviert.

Das Betriebssystem des Datenträgers, vorzugsweise der Betriebssystemkern, steuert die selektive Aktivierung der Module, indem es das selbständige Aktivieren der benötigten Module durch die Applikation selbst ermöglicht und verhindert, dass ohne eine derartige Aktivierung ein Zugriff auf ein benötigtes Hardware-Modul bzw. eine Ausführung eines benötigten BetriebssystemModuls bzw. einer von einem Betriebssystem-Modul bereitgestellten Betriebssystem-Funktion nicht möglich ist.

Auf diese Weise sind jeweils nur diejenigen Hardware-Module und Betriebssystem-Module des Datenträgers aktiv, die zur Ausführung einer bestimmten Applikation benötigt werden. Der Ressourcenbedarf des Datenträgers im Zusammenhang mit der Bereitstellung von Hardware- und Betriebssystem-Modulen gegenüber Applikationen wird optimiert, da jeweils lediglich die aktuell benötigten Module aktiviert sein müssen.

Der Schritt des Aktivierens der Module erfolgt vorzugsweise unabhängig von einer Phase des Startens des Datenträgers. Erst nach dem Starten des Datenträgers, insbesondere auch erst nach dem Aufruf der Applikation, werden die benötigten Module aktiviert. Der Schritt des Aktivierens kann daher mehrfach ausgeführt werden, nämlich für verschiedene Applikationen und die gegebenenfalls entsprechend unterschiedlichen Module.

In der Regel werden die zu aktivierenden Module als eine applikationsbezogene Auswahl, also als eine Auswahl von Modulen für eine Applikation bestimmt. In bevorzugten Ausgestaltungen wird aus den vorhandenen Hard-und/ oder Software-Modulen des Datenträgers für den Datenträger eine Auswahl getroffen, welche der vorhandenen Module als Module aktivierbar sind.

Vorzugsweise werden beim Starten des Datenträgers im Wesentlichen keine Module bzw. lediglich die zur Betriebsfähigkeit des Datenträgers notwendigen Module aktiviert. Vorzugsweise kann eine Applikation die bei ihrer Ausführung benötigten Hardware- und Betriebssystem-Module selbst aktivieren, z. B. über entsprechende von dem Betriebssystem bereitgestellte Aktivierungsaufrufe oder dergleichen. Die Applikation hat also über die Aktivierungsaufrufe einen direkten Zugriff auf das Betriebssystem und die Hardware des Datenträgers. Andere Mechanismen zum Aufruf von Hardware-und/ oder Betriebssystemmodulen werden von dem Betriebssystem vorzugsweise nicht angeboten.

Unter der Aktivierung eines Moduls ist im Zusammenhang mit der vorliegenden Erfindung das Herbeiführen eines Zustands zu verstehen, in dem ein Modul bzw. die von ihm bereitgestellten Funktionen und Routinen von einer Applikation unmittelbar aufgerufen und genutzt werden können. Die erfindungsgemäße selektive Aktivierung auf Veranlassung einer Applikation ist insofern vergleichbar mit einer Initialisierung des betreffenden Moduls (bzw. der betreffenden Funktionen) im Rahmen des Bootvorgangs, wobei erfindungsgemäß die Initialisierung nicht standardmäßig und umfassend beim Starten ("Booten") des Datenträgers erfolgt, sondern vielmehr zu einem beliebigen späteren Zeitpunkt selektiv auf Veranlassung einer Applikation. Diese selektive Aktivierung/Initialisierung kann beispielsweise darin bestehen, dass in einem multitaskingfähigen Betriebssystem entsprechende Betriebssystemprozesse gestartet werden, deren Dienste dann von einer Applikation selektiv in Anspruch genommen werden können.

Beim Starten des Datenträgers wird eine Modultabelle bereitgestellt bzw. angelegt, in der sämtliche auf dem Datenträger vorhandenen, aktivierbaren Hardware-Module und Betriebssystem-Module sowie die jeweils aufzurufende Startadresse des betreffenden Moduls verzeichnet sind. Hierbei umfassen die Betriebssystem-Module sowohl solche Module, die als Bestandteil der ROM-Speicher in dem ROM-Speicher des Datenträgers geschrieben wurden, als auch solche ergänzenden Module, die bei der Komplettierung des Betriebssystems in einen wiederbeschreibbaren Speicher eingeschrieben wurden. Mit Hilfe der Modultabelle kann beim selektiven Aktivieren von Modulen vorab festgestellt werden, ob ein von einer Applikation benötigtes Modul überhaupt auf dem Datenträger verfügbar und aktivierbar ist. In der Modultabelle verzeichnete Module werden dann über die in der Modultabelle angegebene Startadresse aktiviert.

Die Modultabelle kann beim Starten des Datenträgers dadurch bereitgestellt werden, dass sie aus einem Speicher des Datenträgers ausgelesen wird und so für das Betriebssystem und/oder die Applikationen zugreifbar gemacht wird. In diesem Falle wird die Modultabelle vorzugsweise beim Herstellen des Datenträgers vorab erzeugt und dann im ROM-Speicher oder im wiederbeschreibbaren Speicher des Datenträgers hinterlegt. Alternativ ist es auch möglich, dass beim Starten des Datenträgers eine aktive Detektion aller auf dem Datenträger vorhandenen, aktivierbaren Module stattfindet und die detektierten Module mit ihrer Startadresse in eine neue Modultabelle geschrieben werden. Ebenso ist es möglich, eine bereits bestehende Modultabelle durch einen derartigen Detektionsvorgang zu aktualisieren. Die selbständige Erstellung einer Modultabelle hat den Vorteil, dass Module auch nach der Datenträgerherstellung integriert oder entfernt werden können. Die Detektion der Module wird vorzugsweise im Rahmen des Bootvorgangs durchgeführt, beispielsweise durch ein BIOS ("Basic Input Output System"), das ja üblicherweise ohnehin bereits eine erste Hardware-Initialisierung vornimmt, bevor das eigentliche Betriebssystem geladen oder gestartet wird.

Neben der Modultabelle liegt in einem Speicher des Datenträgers vorzugsweise auch eine Konfigurationstabelle, in der Modulkonfigurationen verzeichnet sind, die Regeln für die gemeinsame oder ausschließliche Aktivierung von Modulen repräsentieren. Eine UND-Konfiguration kann (im Sinne einer logischen AND-Verknüpfung) beispielsweise mehrere Module angeben, die in jedem Falle gemeinsam zu aktivieren sind, sobald eines der Module aktiviert wird. Dementsprechend kann eine ODER-Konfiguration (im Sinne einer logischen XOR-Verknüpfung) mehrere Module angeben, von denen jeweils nur eines aktiviert werden darf und die verbleibenden Module der Konfiguration solange nicht aktiviert werden können, wie dieses eine Modul aktiviert bleibt.

Eine UND-Konfiguration kann beispielsweise voneinander abhängige Module angeben, die für einen bestimmten Anwendungsbereich des Datenträgers oder der betreffenden Applikation gleichzeitig aktiviert sein müssen, um die Betriebsfähigkeit in dem entsprechenden Anwendungsbereich sicherzustellen. Ein Datenträger kann einen Anwendungsbereich beispielsweise als Mobilfunkkarte, Zahlungsverkehrskarte, Internet-Webserver, Sicherheitsdatenträger oder dergleichen haben. Ebenso kann eine ODER-Konfiguration mehrere sich ausschließende Module angeben, beispielsweise solche Module, die aufgrund von Ressourcenbeschränkungen oder Echtzeitanforderungen des Datenträgers nicht gleichzeitig aktiviert werden können.

Bei der Aktivierung derjenigen Module, die eine Applikation bei ihrer Ausführung benötigt, werden dann die in Form der Modul-Konfigurationen vorliegenden Nebenbedingungen derart berücksichtigt, dass beispielsweise für jedes von der Applikation benötigte Modul geprüft wird, ob es in einer UND-Konfiguration und/oder einer ODER-Konfiguration angegeben ist. Darüber hinaus kann es auch noch beliebige weitere Arten von Modulkonfigurationen geben, beispielsweise Alternativ-Konfigurationen, die auf dem Datenträger verfügbare Module als Alternative für von einer Applikation angeforderte aber auf dem Datenträger nicht verfügbare Module angeben, um die Ausführbarkeit der Applikation sicherzustellen.

Die Konfigurationstabelle wird vorzugsweise unmittelbar beim Aktivieren von Modulen durch eine Applikation zur Laufzeit der Applikation berücksichtigt. Allerdings ist es ebenso möglich, zumindest einige der in der Konfigurationstabelle genannten Modulkonfigurationen, z.B. Modulkonfigurationen, die für die Betriebsfähigkeit des Datenträgers besonders grundlegende Module betreffen, bereits beim Start des Datenträgers zu berücksichtigen, z.B. um die wichtigsten Module für ein Anwendungsgebiet des Datenträgers oder solche Module, die besonders häufig bei der Ausführung von Applikationen benötigt werden, vorab zu aktivieren.

Die Konfigurationsliste wird vorzugsweise bei der Herstellung des Datenträgers, besonders bevorzugt bei der Komplettierung des Betriebssystems erzeugt und vorzugsweise in einen widerbeschreibbaren Speicher geschrieben, damit sie bei Bedarf aktualisiert und an veränderte Modulkonfigurationen angepasst werden kann.

Beim Starten des Datenträgers wird als zentraler Bestandteil des Betriebssystems zunächst dessen Betriebssystemkern gestartet. Der Betriebssystemkern erledigt die zentralen Aufgaben eines Betriebssystems, z.B. koordiniert er den Zugriff auf und die Vergabe von Hardwareressourcen des Datenträgers oder stellt Schnittstellen für Applikationen bereit. Der Betriebssystemkern kann beispielsweise auch ein Multitasking-Kern sein, der mehrere Prozesse quasi-gleichzeitig abarbeitet. Im Rahmen eines solchen Multitasking-Betriebssystemkerns kann beispielsweise das Starten eines (Betriebssystem-) Dienstprozesses als Aktivierung der entsprechenden Betriebssystemfunktion bzw. des Betriebssystemmoduls verstanden werden.

Im Kontext der vorliegenden Erfindung stellt der Betriebssystemkern den Applikationen des Datenträgers eine Modulschnittstelle bereit, über die eine auszuführende Applikation Module aktivieren kann. Dazu ruft die Applikation eine Aktivierungsroutine des Betriebssystemkern mittels eines Aktivierungsaufrufs auf, der von der Modulschnittstelle des Betriebssystemkerns bereitgestellt wird. Die Modulschnittstelle des Betriebssystemkerns repräsentiert insofern eine von den Applikationen nutzbare, standardisierte Anwendungsprogrammierschnittstelle (API), um auf Hardware- und Betriebssystem-Module des Datenträgers in einer bibliotheksartigen Weise zugreifen zu können.

Vorzugsweise werden die von einer Applikation selektiv aktivierten Module nach Beendigung der Applikation wieder deaktiviert, entweder von der Applikation selbst oder von dem Betriebssystemkern des Datenträgers, der die aktivierten Module und deren Zugehörigkeit zu laufenden Applikationen (d.h. vom Mikroprozessor ausgeführten Applikationsprozessen) protokolliert. Dadurch werden die durch die aktivierten Module gebundenen Ressourcen wieder freigegeben.

Darüber hinaus kann eine Zugriffsrechteverwaltung eingerichtet werden, vorzugsweise in dem die Modulschnittstelle bereitstellenden Betriebssystemkern, die prüft, ob eine Applikation ein Zugriffsrecht auf ein von ihr benötigtes Modul besitzt bzw. ob eine Applikation überhaupt berechtigt ist, über die Modulschnittstelle selektiv Module zu aktivieren.

In weiteren Ausgestaltungen wird in dem tragbaren Datenträger, beispielsweise anhand von Parametern, vorgegeben, mit welchen Eigenschaften ein Modul aktivierbar ist. Solche Vorgaben können spezifisch für die Applikation oder den Datenträger sein. Mögliche Vorgaben können beispielsweise eine Puffergröße oder eine Übertragungsrate eines Hardwaremoduls oder der verfügbare flüchtige Speicher für ein Softwaremodul sein.

Bei der Komplettierung werden die im ROM-Speicher bibliotheksartig untergebrachten Betriebssystem-Module durch eine Verknüpfungstabelle zu funktionsfähigen Betriebssystemanwendungen verbunden. Die Verknüpfungstabelle gibt also ähnlich wie die Konfigurationstabelle Modulkonfigurationen an, die jedoch für die Ausführung von Betriebssystemanwendungen benötigt werden. Neben der Modultabelle und der Konfigurationstabelle kann bei der Aktivierung von Modulen durch eine Applikation aber auch die Verknüpfungstabelle berücksichtigt werden, z.B. wenn eine auszuführende Applikation eine in der Verknüpfungstabelle verzeichnete Betriebssystemanwendung aufruft und die entsprechenden Betriebssystem-Module zu aktivieren sind. Deshalb werden die von Betriebssystemanwendungen benötigten, in der Verknüpfungstabelle verzeichneten Betriebssystem-Module nicht im Rahmen des Bootvorgangs standardmäßig aktiviert/ initialisiert, sondern verbleiben vorzugsweise auch bis zum Aufruf durch eine Betriebssystemanwendung unaktiviert.

Tragbare Datenträger im vorliegenden Sinne sind beispielsweise Chipkarten, SIM-Karten, USB-Token und sichere Massenspeicherkarten.

Weitere Merkmale und Vorteile der Erfindung ergeben sich aus der folgenden Beschreibung von erfindungsgemäßen Ausführungsbeispielen sowie weiteren Ausführungsalternativen im Zusammenhang mit den beiliegenden Zeichnungen, die zeigen:
- Figur 1: einen erfindungsgemäßen Datenträger;
- Figur 2: ein Flussdiagramm eines erfindungsgemäßen Verfahrens;
- Figur 3: ein Schema der Modulschnittstelle des Betriebssystemkerns; und
- Figur 4: ein Schema einer Auswahl von Modulen anhand eines Anwendungsbereichs des Datenträgers.

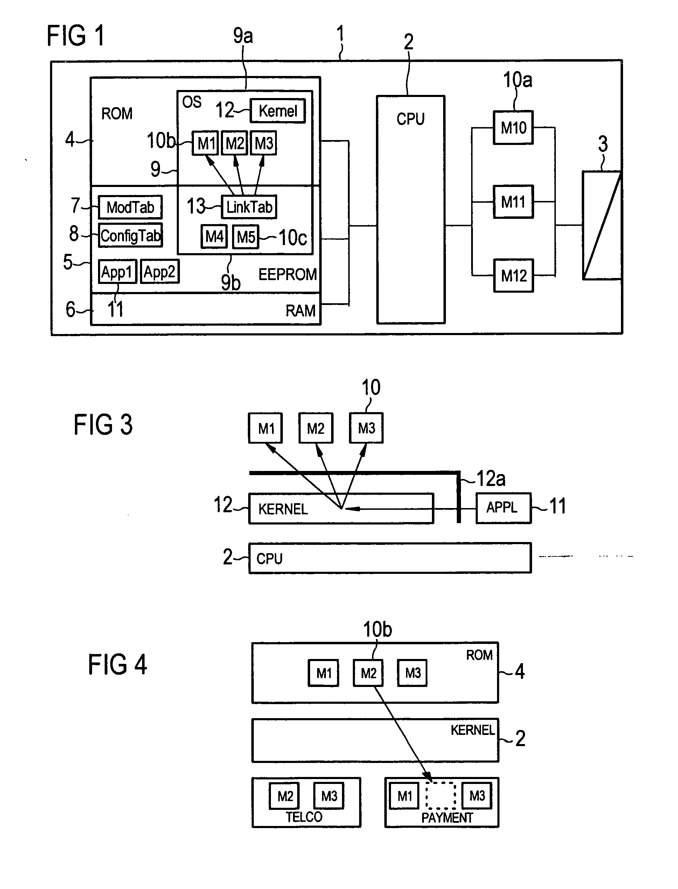

Figur 1 zeigt einen Datenträger in Form einer Mikroprozessor-Chipkarte 1, welche die üblichen Komponenten einer Chipkarte 1 umfasst, nämlich einen Prozessor 2 (CPU), eine Kommunikationsschnittstelle 3 zur Kommunikation z.B. mit Chipkarten-Lesegeräten, sowie eine Speicheranordnung bestehend aus einem permanenten ROM-Speicher 4, einem wiederbeschreibbaren EEPROM-Speicher 5 und einem flüchtigen RAM-Arbeitsspeicher 6.

Das Betriebssystem 9 der Chipkarte 1 besteht aus einem im ROM-Speicher 4 liegenden Teil 9a und einem im EEPROM-Speicher 5 liegenden Teil 9b. Im Vergleich mit dem wiederbeschreibbaren EEPROM-Speicher 5 ist der ROM-Speicher 4 wesentlich kostengünstiger, schneller und sichererer. Da insbesondere die Chipfläche des EEPROM-Speichers 5 um ein Vielfaches größer ist als diejenige des ROM-Speichers 4 bei vergleichbarer Speicherkapazität, wird der im ROM-Speicher 4 abgelegte Betriebssystemanteil 9a so groß wie möglich gemacht, während im EEPROM-Speicher 5 lediglich ergänzende Betriebssystemanteile 9b liegen.

Diese Aufteilung des Betriebssystems 9 in einen ROM-Anteil 9a und einem EEPROM-Anteil 9b wird durch ein zweistufiges Verfahren zur Herstellung der Chipkarte 1 realisiert, bei dem das Betriebssystem 9 in zwei Teilen 9a, 9b in der Chipkarte 1 installiert wird, nämlich zunächst der ROM-Anteil 9a im Rahmen des Einspielens der vorgegebenen ROM-Maske in den ROM-Speicher 4 und anschließend der EEPROM-Anteil 9b im Rahmen der Komplettierung. Der ROM-Anteil 9a ist bibliotheksartig organisiert und umfasst die unveränderlichen Betriebssystem-Module 10b (M1, M2, M3), die die eigentlichen Betriebssystemfunktionen und -routinen bereitstellen. Diese werden durch die anschließende Komplettierung mittels einer im EEPROM-Speicher 5 hinterlegten Verknüpfungstabelle 13 (LinkTab) zu funktionsfähigen Betriebssystemanwendungen (bzw. zu einem funktionsfähigen Betriebssystem) mittels entsprechender Aufrufe verknüpft. Die wesentlichen (funktionalen) Teile 9a des Betriebssystems 9 und auch der Betriebssystemkern 12 (Kernel) sind somit im ROM-Speicher 4 untergebracht. Bei der Komplettierung werden die ROM-Anteile 9a lediglich für deren Anwendung angepasst. Die im ROM-Speicher 4 vorhandenen Anteile 9a des Betriebssystems 9 können hardwarenah implementiert sein, beispielsweise in Assembler oder über ein VHDL-Design ("Very High Speed Integrated Circuit Hardware Description Language"), um eine hohe Performance sowie einen geringen Speicherbedarf der Betriebssystem-Module 10b zu gewährleisten. Darüber hinaus können einzelne Betriebssystem-Module 10b und auch der Betriebssystemkern 12 eigenständig sicherheitsevaluiert sein, um ein hohes Sicherheitsniveau des Betriebssystems 9 zu erreichen.

Zusätzlich besteht die Möglichkeit bei der Komplettierung, weitere Betriebssystem-Module 10c (M4, M5) in den EEPROM-Speicher 5 zu laden, die jedoch unabhängig von eventuell später in den EEPROM-Speicher 5 geladenen Applikationen 11 (Appl1, Appl2) sind. Die bei der Komplettierung geladenen Betriebssystem-Module 10c werden als EEPROM-Anteil 9b vielmehr vollständig in das Betriebssystem 9 integriert und sind hinsichtlich der Bereitstellung von Betriebssystemfunktionen und -routinen und hinsichtlich ihres Aufrufs durch Applikationen 11 prinzipiell nicht vom dem ROM-Anteil 9a mit den Betriebssystem-Modulen 10b zu unterscheiden.

Neben den Betriebssystem-Software-Modulen 10b und 10c existieren in der Chipkarte 1 auch Hardware-Module 10a (M6, M7, M8), die beispielsweise Kommunikationsschnittstellen für bestimmte Kommunikationsprotokolle, wie z.B. USB, ISO oder SWP, Hardwarekomponenten mit spezialisierten Funktionen, wie z.B. ein Kryptografie-Modul oder ein UART-Pufferspeicher, oder dergleichen repräsentieren, wobei ein solches Hardware-Modul 10a auch einen Softwareanteil im Betriebssystem einschließt, z.B. eine Treiberroutine oder dergleichen. In bestimmten Fällen können die Hardware-Module 10a, z.B. aus Sicherheits- oder Leistungsgründen, direkt mit der Hardware-Plattform der Chipkarte 1 interagieren oder sogar Bestandteile dieser Hardware-Plattform sein. Dazu können die Hardware-Module 10a z.B. als VHDL-Bibliothek für die Erzeugung einer Peripherie-Hardware zur Verfügung stehen. Ein Beispiel hierfür ist ein UART-Speicherbaustein mit einem Hardware-FIFO-Puffer.

Der üblicherweise im ROM-Speicher 4 liegende Betriebssystemkern 12 des Betriebssystems 9 stellt grundlegende Funktionen für den Betrieb der Chipkarte 1 und des Mikroprozessors 2 bereit, z.B. die Prozess- und Datenorganisation, Hardware- und Applikationsschnittstellen und dergleichen. Insbesondere erlaubt der Betriebssystemkern 12 einen Zugriff auf die Hardware-und Betriebssystem-Module 10a, 10b, 10c durch Applikationen 11 über eine Modulschnittstelle 12a. Hierbei können für die Betriebsfähigkeit besonders grundlegende Betriebssystem-Module 10b als BIOS (nicht dargestellt) des Betriebssystems 9 zusammengefasst werden und so die Firmware der Chipkarte 1 bilden.

Beim Starten der Chipkarte 1, d.h. im Rahmen des üblichen Bootvorgangs, werden die Module 10 nicht grundsätzlich und vollständig aktiviert, d.h. sie werden von dem Betriebssystemkern 12 nicht derart initialisiert, dass sie für eine Applikation 11 unmittelbar zugreifbar bzw. aufrufbar sind. Vielmehr werden die von einer Applikation 11 bei ihrer Ausführung benötigten Module 10 von dieser selektiv über die Modulschnittstelle 12a des Betriebssystemkerns 12 aktiviert/ initialisiert und nach ihrer Abarbeitung oder nach Beendigung der Applikation 11 bzw. des betreffenden Applikationsprozesses wieder deaktiviert. Das selektive Aktivieren der von einer Applikation 11 bei ihrer Ausführung benötigten Module 10 wird im wesentlichen über die Modultabelle 7 (ModTab) und die Konfigurationstabelle 8 (ConfigTab) gesteuert, die beide im EEPROM-Speicher 5 liegen. Dadurch kann die Anzahl der zu einem Zeitpunkt aktivierten (und Ressourcen verbrauchenden) Module 10 minimiert und der Ressourcenverbrauch der Chipkarte 1 optimiert werden.

In diesem Zusammenhang dient der Betriebssystemkern 12 zusammen mit der Modulschnittstelle 12a dazu, die Hardware-Module 10a und die Betriebssystem-Module 10b, 10c gegenüber einer Applikation 11 bereitzustellen und eine flexible Konfiguration der Module 10 zu ermöglichen, die beispielsweise von einem Anwendungsgebiet der Chipkarte 1 oder einer Applikation 11 abhängig sein kann. Auf diese Weise werden grundlegende I/O-Funktionalitäten des Betriebssystems 9 bereitgestellt und für Applikationen 11 selektiv zugreifbar gemacht. Durch die auf diese Weise mögliche geeignete Konfigurierung der Module 10 kann das Betriebssystem 9 an Anwendungsbereiche, für die die Chipkarte 1 vorgesehen ist, angepasst werden, z.B. an die Verwendung der Chipkarte 1 als SIM-Mobilfunkkarte, Geldkarte, Internet-Webserver, Gesundheitskarte, Sicherheitsdatenträger oder dergleichen. Insbesondere unterstützen moderne Chipkarten-Betriebssysteme 9 mehrere Kommunikationsprotokolle, z. B. USB, ISO, SWP oder dergleichen, wobei innerhalb eines Protokolls, wie z. B. USB, verschiedene Protokollvarianten in dem Betriebssystem 9 bzw. den entsprechenden Modulen 10 gefordert sein können, wie z. B. USB-Massenspeicher oder USB-Ethernet in den Varianten RNDIS, CDC oder EEM.

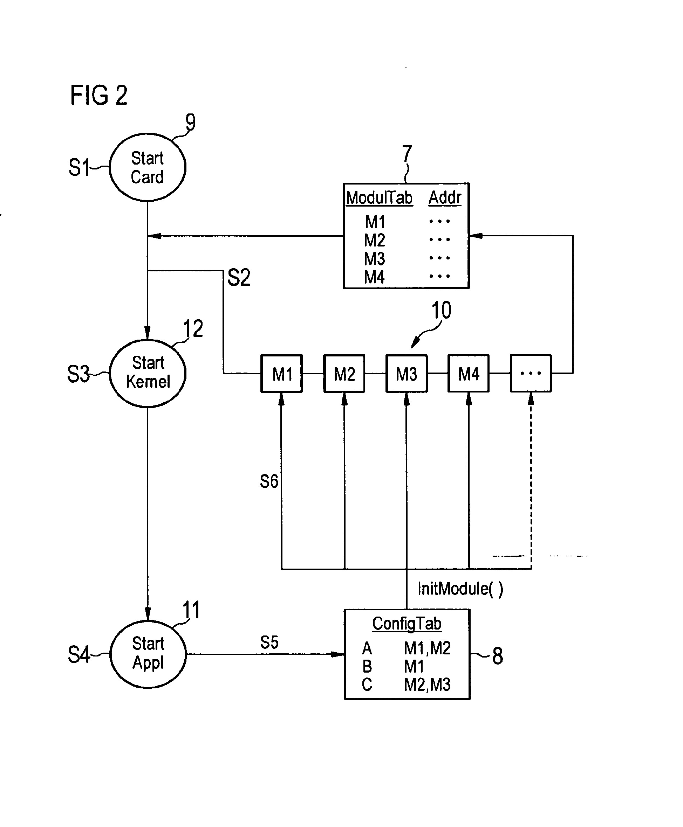

Figur 2 zeigt ein Flussdiagramm, das beim Ausführen einer Applikation 11 nach der Komplettierung der erfindungsgemäßen Chipkarte 1 abgearbeitet wird.

In Schritt S1 wird zunächst die Chipkarte 1 gestartet (Start Card). Hierbei wird auch das BIOS der Chipkarte 1 geladen, welches z.B. bestimmte, für die Funktionsweise der Chipkarte 1 unerlässliche Hardwarekomponenten initialisiert. Außerdem lädt das BIOS einen Bootlader, der später in Schritt S3 den Betriebssystemkern 12 lädt und startet. Im Rahmen des Bootvorgangs des Betriebssystems 9 werden nur die unbedingt für die Betriebsfähigkeit der Chipkarte 1 benötigten Hardware-Module 10a und Betriebssystemmodule 10b, 10c aktiviert bzw. initialisiert. Falls es sich bei dem Betriebssystem 9 um ein multitaskingfähiges Betriebssystem 9 handelt, kann die Aktivierung (bzw. Initialisierung) eines Moduls 10 beispielsweise im Starten eines entsprechenden Betriebssystemprozesses bestehen.

In Schritt S2 wird die Modultabelle 7 bereitgestellt, entweder indem sie aus dem EEPROM-Speicher 5 ausgelesen und den Applikationen 11 verfügbar gemacht wird oder indem im Rahmen des Bootvorgangs eine Detektion der vorhandenen Hardware-Module 10a und der im ROM-Speicher 4 sowie im wiederbeschreibbaren EEPROM-Speicher 5 vorhandenen Betriebssystem-Module 10b, 10c durchgeführt wird, beispielsweise durch das BIOS. Die detektierten Module 10 werden dann als auf der Chipkarte 1 prinzipiell vorhandene, aktivierbare Module 10 in der Modultabelle 7 verzeichnet. In der Modultabelle 7 wird für jedes aktivierbare Modul 10 die Startadresse (Addr) angegeben, unter der das betreffende Modul von einer Applikation 11 im ROM-Speicher 4 (oder EEPROM-Speicher 5) aufrufbar ist.

In Schritt S3 wird der Betriebssystemkern 12 von einem Bootlader geladen und gestartet (Start Kernel). Der Betriebssystemkern 12 stellt bestimmte grundsätzliche Funktionen des Betriebssystems 9 zur Verfügung, insbesondere werden grundlegende Systemkomponenten initialisiert (z. B. die Systemuhr oder dergleichen) sowie weitere plattformspezifische Einstellungen vorgenommen und der initialen Applikation (SIGMA0) eine definierte Ausführungsumgebung zur Verfügung gestellt. Darüber hinaus stellt der Betriebssystemkern die Modulschnittstelle 12a bereit, über die die Applikationen 11 die Module 10 aktivieren können und die als Anwendungsprogrammierschnittstelle (API) ausgestaltet sein kann.

In Schritt S4 wird schließlich eine von dem Betriebssystem 9 unabhängige Applikation 11 gestartet (Start Appl). Der Applikation 11 steht dann die Modulschnittstelle 12a des Betriebssystemkerns 12 zur Verfügung, über die die von der Applikation 11 für ihre Ausführung benötigten Module 10 selektiv aktiviert werden können, beispielsweise mittels eines definierten Aktivierungsaufrufs *"InitModule()",* der von einer entsprechenden Routine des Betriebssystemkerns 12 bearbeitet wird.

Die für die Ausführung der Applikation 11 benötigten Module 10 werden von der Applikation 11 selbst bestimmt und die Applikation 11 prüft selbstständig anhand der Modultabelle 7, ob die benötigten Module 10 auf der Chipkarte 1 verfügbar sind. Die benötigten Module 10 werden dann unter Angabe der aus der Modultabelle 7 entnommenen Startadressen (Addr) aktiviert, z.B. indem die jeweiligen Startadressen Argumente des Aktivierungsaufrufs bilden, z.B. in der Form *InitModule(Addr1, Addr2, Addr3).*

Neben der Modultabelle 7 wird zur Bestimmung der für die Applikation 11 zu aktivierenden Module 10 in Schritt S5 die Konfigurationstabelle 8 herangezogen. Die Konfigurationstabelle 8 umfasst Modulkonfigurationen, die Regeln zur Berücksichtigung von Abhängigkeiten oder Auschlüssen hinsichtlich der gemeinsamen Aktivierung von Modulen 10 repräsentieren. Diese Modulkonfigurationsregeln können beispielsweise von dem Betriebssystemkern 12 berücksichtigt werden, sobald ein Modulaufruf einer Applikation 11 über die Modulschnittstelle eingeht.

Die Modelkonfigurationen der Konfigurationstabelle 8 geben beispielsweise UND-Konfigurationen vor, die Abhängigkeiten zwischen Modulen 10 angeben, wonach bei der Aktivierung eines der genannten Module 10 auch die weiteren in der Modulkonfiguration genannten Module 10 zu aktivieren sind. Dies kann beispielsweise den Fall betreffen, dass eine auszuführende Applikation 11 bestimmte produktspezifische Charakteristika der Chipkarte 1 nutzt, die Abhängigkeiten innerhalb der Module 10 zur Folge haben, z.B. derart, dass eine Reihe von Modulen 10 gleichzeitig aktiviert sein muss, um die betreffenden produktspezifische Charakteristika zu realisieren. Beispielsweise können bei einer Applikation 11, die im Zusammenhang mit der Verwendung der Chipkarte 1 als Zahlungsverkehrskarte ausgeführt werden soll, diejenigen Module 10 über eine entsprechende Modulkonfiguration gleichzeitig aktiviert werden, die die benötigten Zahlungsverkehrsfunktionalitäten für eine Applikation 11 bereitstellen. Ähnliches gilt für weitere Anwendungsgebiete der Applikation 11 bzw. der Chipkarte 1, beispielsweise als Internet-SmartCard, SIM-Mobilfunkkarte, Gesundheitskarte oder dergleichen.

Ebenso kann die Konfigurationstabelle 8 Modul-Konfigurationen aufweisen, die ein gleichzeitiges Aktivieren bestimmter Module 10 ausschließen, da entsprechende Ausschlusskriterien vorliegen. Wenn ein in einer solchen ODER-Konfigurationen genanntes Modul 10 von der Applikation 11 bei ihrer Ausführung benötigt wird, können die weiteren von der betreffenden ModulKonfiguration genannten Module 10 so lange nicht aktiviert werden, wie das bereits aktivierte Modul 10 aktiv ist, d. h. unter Umständen während der gesamten Laufzeit der Applikation 11. Weiterhin kann es Modul-Konfigurationen geben, die Substitutionen vornehmen, indem Module 10 angegeben werden, die zu aktivieren sind, sofern von einer Applikation 11 benötigte Module 10 nicht in der Modultabelle 7 verzeichnet sind. Ebenso ist es möglich, über die Modulkonfigurationen bestimmte Ausbaustufen der Chipkarte 1 zu realisieren, beispielsweise um die Chipkarte 1 für bestimmte Kunden besonders leistungsfähig zu machen oder höherwertige Dienste zuzuschalten.

Die durch die Konfigurationstabelle 8 in Schritt S5 bestimmten zu aktivierenden Module 10 werden anschließend in Schritt S6 mit einem oder mehreren *InitModule()-Aufrufen* aktiviert. Hierbei prüft beispielsweise der Betriebssystemkern 12 die jeweilige Zugriffsberechtigung der Applikation 11 auf die Module 10. Die Zugriffsberechtigungen können sich alternativ auch aus der Modultabelle 7 und/ oder der Konfigurationstabelle 8 ergeben, so dass sie auch von der Applikation 11 selbst berücksichtigt werden können. Optional kann die Prüfung der Zugriffsrechte auf Applikationsebene als sicherer, vertrauenswürdiger Dienst ("Trusted Service") in einem Sicherheitsmodus ("Trusted Mode") des Mikroprozessors 2 realisiert werden. Die Zugriffsrechtsprüfung erfolgt vorzugsweise über eine schlüsselbasierte Authentisierung bei dem jeweiligen Modul 10. Schließlich werden die derart aktivierten Module 10 nach vollständiger Abarbeitung der Applikation 11 oder des betreffenden Moduls 10 vorzugsweise von dem Betriebssystemkern 12 wieder deaktiviert, um die Ressourcen der Chipkarte 1 zu schonen.

Figur 3 illustriert die zur Aktivierung von Modulen 10 von dem Betriebssystemkern 12 bereitgestellte API-Modulschnittstelle 12a, über die eine Applikation 11 dem Betriebssystemkern 12 die von diesem zu aktivierenden Module 10 angibt. Der Betriebssystemkern 12 greift dann beispielsweise direkt auf die von einem Hardware-Modul 10a repräsentierte Hardwarekomponente der Chipkarte 1 zu, welche ihrerseits ihre Funktionen über die Modulschnittstelle 12 der betreffenden Applikation 11 anbietet. Den Applikationen 11 können jedoch neben der Modulschnittstelle 12a des Betriebssystemkerns 12 auch die verschiedenen Schnittstellen der einzelnen Module 10 ergänzend für einen unmittelbaren Zugriff zur Verfügung stehen.

Figur 4 illustriert den Prozess des Aktivierens einer Mehrzahl von im ROM-Speicher 4 liegenden, abhängigen Betriebssystem-Modulen 10b, um die Voraussetzungen für die Verwendung einer Chipkarte 1 bzw. ihrer Applikationen 11 im Rahmen eines bestimmten, vorgegebenen Anwendungsgebiets zu schaffen, z.B. Telekommunikation ("TELCO") oder Zahlungsverkehr ("PAYMENT"). Wie in Figur 4 illustriert, benötigt das Anwendungsgebiet "TELCO" aus dem im ROM-Speicher 4 zur Verfügung stehenden Modulen M1, M2 und M3 beispielsweise die Module M2 und M3, während für das Anwendungsgebiet "PAYMENT" die Module M1, M2 und M3 benötigt werden. Derartige Abhängigkeiten gehen beispielsweise aus den Modulkonfigurationen der Konfigurationstabelle 8 hervor. Neben der Berücksichtigung der Konfigurationstabelle 8 durch jede einzelne Applikation 11 kann auch der Betriebssystemkern 12 für ein bestimmtes Anwendungsgebiet grundlegende Modulkonfigurationen bereits bei dem Startvorgang berücksichtigten, beispielsweise im Rahmen des in Fig. 2 illustrierten Schritts S3. Allerdings kann eine Chipkarte 1 auch gleichzeitig mehrere Anwendungsgebiete haben, z.B. diejenigen einer Zahlungsverkehrskarte, einer SIM-Mobilfunkkarte, und einer Kommunikationskarte, je nach Einsatz der Chipkarte 1 durch deren Benutzer.

Eine andere Form der Konfigurationstabelle stellt die bei der Komplettierung des Betriebssystems in den EEPROM-Speicher 5 geschriebene Verknüpfungstabelle 13 dar, da sie die Verknüpfungen der ROM-Betriebssystem-Module 10b zu funktionsfähigen Betriebssystemanwendungen und schließlich zu einem funktionsfähigen Betriebssystem 9 vorgibt. Auch über die Verknüpfungstabelle 13 kann eine Applikation 11 selektive Modulaktivierungen vornehmen, z.B. dann, wenn die Applikation 11 eine in der Verknüpfungstabelle 13 vorgegebene Betriebssystemanwendung aufrufen muss. Das heißt aber andererseits auch, dass die Verknüpfungstabelle 13 nicht im Rahmen des Bootvorgangs der Chipkarte 1 von dem Betriebssystemkern 12 zur Aktivierung des Betriebssystems abgearbeitet wird, sondern auch die Betriebssystemanwendungen die von ihnen benötigten Module im Anwendungsfall selektiv aktivieren können.

## Patentansprüche

1. Verfahren auf einem portablen Datenträger (1) mit einem Mikroprozessor (2) zur Ausführung von Applikationen (11), wobei der Datenträger (1) Hardware-Module (10a) und/oder in einem Speicher (4, 5) gespeicherte Betriebssystem-Module (10b, 10c) als vorhandene Module (10a, 10b, 10c) umfasst, und wobei die vorhandenen Module (10a, 10b, 10c) aktiviert werden müssen, damit sie verwendbar sind, **dadurch gekennzeichnet, dass** von den vorhandenen Modulen (10a, 10b, 10c) für die Ausführung einer Applikation (11) benötigte Module (10) selektiv aktiviert werden (S6).

2. Verfahren nach Anspruch 1, **dadurch gekennzeichnet, dass** der Schritt des Aktivierens (S6) der Module (10) unabhängig von einer Phase des Startens (S1) des Datenträgers (1) erfolgt.

3. Verfahren nach Anspruch 1 oder 2, **gekennzeichnet durch**, Bestimmen (S5) der zu aktivierenden Module (10) als eine applikationsbezogene Auswahl.

4. Verfahren nach einem der Ansprüche 1 bis 3, **dadurch gekennzeichnet, dass** eine datenträgerbezogene Auswahl der vorhandenen Module (10a, 10b, 10c) als Module (10) aktivierbar ist.

5. Verfahren nach einem der Ansprüche 1 bis 4, **dadurch gekennzeichnet, dass** beim Starten (S1) des Datenträgers (1) im Wesentlichen keines der aktivierbaren Modul (10) aktiviert wird und die zur Ausführung der Applikation (11) benötigten Module (10) zur Laufzeit der Applikation (11) bestimmt (S5) und selektiv aktiviert werden (S6).

6. Verfahren nach einem der Ansprüche 1 bis 5**, dadurch gekennzeichnet, dass** beim Starten (S1) des Datenträgers (1) eine Modultabelle (7) bereitgestellt wird (S2), in der die aktivierbaren Hardware-Module (10a) und die in einem Permanentspeicher (4) oder in einem wiederbeschreibbaren Speicher (5) des Datenträgers (1) vorliegenden aktivierbaren Betriebssystem-Module (10b, 10c) angegeben sind, und die von der Applikation (11) benötigten Module (10) anhand der Modultabelle (7) aktiviert werden (S6).

7. Verfahren nach Anspruch 6, **dadurch gekennzeichnet, dass** die Modultabelle (7) Startadressen zur Aktivierung der aktivierbaren Module (10) angibt und bereitgestellt wird (S2), indem eine bereits bestehende Modultabelle (7) der aktivierbaren Module (10) des Datenträgers (11) aus einem Speicher (5) des Datenträgers (1) ausgelesen wird oder indem eine Modultabelle (7) durch Detektieren (S2) der auf dem Datenträger (1) aktivierbaren Module (10) erstellt wird.

8. Verfahren nach einem der Ansprüche 1 bis 7, **dadurch gekennzeichnet, dass** ein Hardware-Modul (10b) derart aktiviert wird (S6), dass die Applikation (11) auf das Hardware-Modul (10a) zugreifen kann, und ein Betriebssystem-Modul (10b, 10c) derart aktiviert wird (S6), dass das Betriebssystem-Modul (10b, 10c) von der Applikation (11) aufgerufen werden kann.

9. Verfahren nach einem der Ansprüche 1 bis 8, **dadurch gekennzeichnet, dass** in einem Speicher (5) des Datenträgers (1) eine Konfigurationstabelle (8) mit Modul-Konfigurationen vorliegt und die zur Ausführung der Applikation (11) zu aktivierenden Module (10) anhand der von der Konfigurationstabelle (8) vorgegebenen Modul-Konfigurationen bestimmt werden (S5).

10. Verfahren nach Anspruch 9, **dadurch gekennzeichnet, dass** die Konfigurationstabelle (8) Modul-Konfigurationen mit voneinander abhängigen Modulen (10) oder sich ausschließenden Modulen (10) umfassen kann und bei Aktivierung (S6) eines Moduls (10) die durch entsprechende Modul-Konfigurationen vorgegebenen abhängigen Module (10) ebenfalls aktiviert werden (S6) und die durch entsprechende Modul-Konfigurationen vorgegebenen ausgeschlossenen Module (10) zumindest während einer Aktivierungszeit des aktivierten Moduls (10) nicht mehr aktiviert werden.

11. Verfahren nach Anspruch 9 oder 10, **dadurch gekennzeichnet, dass** die Konfigurationstabelle (8) Modul-Konfigurationen mit abhängigen Modulen (10) umfasst, die in Abhängigkeit eines Anwendungsgebiets der Applikation (11) oder eines Typs des Datenträgers (1) gemeinsam aktiviert werden (S6).

12. Verfahren nach einem der Ansprüche 9 bis 11, **dadurch gekennzeichnet, das** die Konfigurationstabelle (8) im Rahmen der Herstellung des Datenträgers (1) in den wiederbeschreibbaren Speicher (5) des Datenträgers (1) geschrieben wird, vorzugsweise im Rahmen der Komplettierung des Betriebssystems (9) des Datenträgers (1).

13. Verfahren nach einem der Ansprüche 1 bis 12, **dadurch gekennzeichnet, dass** beim Starten (S1) des Datenträgers (1) ein Betriebssystemkern (12) mit einer Modulschnittstelle (12a) gestartet wird (S3), wobei ein Modul (10) durch Zugreifen auf die Modulschnittstelle (12a) des Betriebssystemkerns (12) aktiviert wird (S6), vorzugsweise durch einen von einer Aktivierungsroutine des Betriebssystemkerns (12) behandelten Aktivierungsaufruf der Applikation (11) an die Modulschnittstelle (12a).

14. Verfahren nach einem der Ansprüche 1 bis 13, **dadurch gekennzeichnet, dass** bei der Komplettierung des Betriebssystems (9) eine Verknüpfungstabelle (13) in den wiederbeschreibbaren Speicher (5) des Datenträgers (1) geschrieben wird, die die zur Ausführung einer Betriebssystemanwendung benötigten Betriebssystem-Module (12b) angibt, wobei die von einer Betriebssystemanwendung benötigten Betriebssystem-Module (10b) aktiviert werden (S6), wenn die Applikation (11) die Betriebssystemanwendung aufruft.

15. Verfahren nach einem der Ansprüche 1 bis 14, **dadurch gekennzeichnet, dass** die zur Ausführung der Applikation (11) aktivierten Module (10) nach Beendigung der Ausführung der Applikation (11) wieder deaktiviert werden.

16. Verfahren nach einem der Ansprüche 1 bis 15, **dadurch gekennzeichnet, dass** beim Aktivieren (S6) eines Moduls (10) eine Zugriffsberechtigung der Applikation (11) auf das Modul (10) geprüft wird, und das Modul (10) nur aktiviert wird, wenn die Applikation (11) die Zugriffsberechtigung be-sitzt.

17. Portabler Datenträger (1), umfassend einen Mikroprozessor (2), weitere Hardware-Module (10a), zumindest einen Speicher (4, 5), in dem Betriebssystem-Module (10b, 10c) eines Betriebssystems (9) des Datenträgers (1) gespeichert sind, und einen Speicher (5), in dem eine ausführbare Applikation (11) gespeichert ist, **dadurch gekennzeichnet, dass** das Betriebssystem (9) des Datenträgers (1) derart eingerichtet ist, dass bei Ausführung der Applikation (11) auf dem Mikroprozessor (2) benötigte Module (10) des Datenträgers (1) selektiv aktiviert werden können.

18. Datenträger (1) nach Anspruch 17, **dadurch gekennzeichnet, dass** der Datenträger (1) eingerichtet ist, ein Verfahren nach einem der Ansprüche 2 bis 17 auszuführen.
